Europäisches Patentamt

European Patent Office

Office européen des brevets

(19)

(11) Publication number: **0 337 573**
**A1**

## (12) EUROPEAN PATENT APPLICATION

(21) Application number: **89200911.9**

(22) Date of filing: **12.04.89**

(51) Int. Cl.4: **A23K 1/18 , A23K 1/14**

Claim for the following Contracting State: ES.

(30) Priority: **15.04.88 NL 8800982**

(43) Date of publication of application:
**18.10.89 Bulletin 89/42**

(84) Designated Contracting States:
**AT BE CH DE ES FR GB GR IT LI LU NL SE**

(71) Applicant: **TROUW INTERNATIONAL B.V.**
**Veerstraat 38**
**NL-5831 JN Boxmeer(NL)**

(72) Inventor: **Caris, Joseph Antonius Marie**
**Nijverheidsweg 2**
**NL-3881 LA Putten(NL)**

(74) Representative: **Elzas, Salomon, Drs. et al**
**Octrooibureau Polak & Charlouis Laan**
**Copes van Cattenburch 80**
**NL-2585 GD The Hague(NL)**

(54) **Digestible vegetable composition for pet food and manufacturing process.**

(57) The invention relates to a digestible vegetable composition for pet food in the form of particles which contain predominantly powdered vegetable, and furthermore minor amounts of starch and, if desired, sugars and/or fat. Also a process for manufacturing such a composition is provided comprising milling vegetable in dried form to a powder, mixing a predominant amount thereof with a minor amount of starch, and, if desired, sugar and/or fat, and extruding the obtained mixture.

EP 0 337 573 A1

**Digestible vegetable composition for pet food and manufacturing process.**

It is desirable to add to a dry dog food and, to a lesser extent, also to a cat food particles which contain vegetable or due to their colour and different shape create this impression. With this respect three categories can be distinguished:

1. Raw or blanched and then dried pieces of vegetables. Accordingly pet food containing such particles rightly gives the impression of the presence of vegetables. However, these products are not digestible by dogs and cats. Consequently, they are found again in the dung.

2. Often orange and green coloured, expanded corn particles or the like are used. The purpose of this use is only the colour effect of the granules or flakes in the food. Consequently, these products should be considered substitute vegetables. Also combinations of small amounts of vegetables and colorants occur.

3. Apart therefrom, paste products (macaroni and the like) are used to which a small amount of powdery vegetables has been added. How ever, the dose of the real vegetables is very low sothat also here mainly a colouring effect occurs.

GB-A-1,440,116 discloses in Example 11 a food product containing a central core and a covering layer, both of which contain navy bean meal. However, navy beans are considered legumes and not vegetables. Furthermore, the food product of this Example satisfies the general requirement of this patent that it contains a considerable amount of proteinaceous animal meal sothat it is quite uncomparable to the products of the present invention.

FR-A-2,594,644 discloses a food supplement for carnivorous pets containing phytotherapeutical substances, together with vitamins, minerals and trace elements. According to page 5, lines 25-33 the supplement is prepared in the form of a finely divided powder, which then can be mixed with gelatin, in order to incorporate it in a normal food ration, such as a biscuit.

The invention now provides particles which do not only create the suggestion of vegetables, but also actually contain predominantly vegetables and this in a form which is digestible to the animals.

To this end the invention provides a vegetable composition for pet food which is characterized by the fact that it has the form of particles which contain predominantly powdery vegetable and furthermore smaller amounts of starch and, if desired, sugars and fats. The particles can possess the usual shape of granules or lumps, but according to aparticular embodiment they can possess the shape of flakes, in which case they generally have a thickness of 0.2-3 mm.

In order to make the vegetables digestible to dogs and cats, one may suitable start from mild and dried vegetables or powdery vegetables. Some starch is added, in order to extrude the mixture to granules which possess sufficient coherence. Pre-gelatinized starch is particularly suitable, but e.g. raw starch or milled grain is also useful.

If flakes are desired, the obtained granules thereafter can be processed to flakes with the aid of a roller.

Furthermore, the granules or flakes, if desired, can be dried to a suitable moisture content.

Due to the milling, the cell structures of the vegetables have been communited already to a sufficient degree, and the additional heat treatment in the extruder makes the vegetables digestible for a predominant part.

However, the vegetable flakes obtained exclusively with powdered vegetables and starch, still are vulnerable and can crumble. Moreover, the animals generally do not like vegetable so much. By adding to the starch mixture also one or more sugars, e.g. dextrose, and/or fats, the flakes become more flexible and palatable. Moreover, fat can be applied to the flakes as a coating, whereby the colour intensity and the palatability for the animals will increase still further.

Examples of vegetable powders are carrot powder, spinach powder, bean powder, paprika etc.

An example of a preferred composition which is introduced into an extruder and is procesed to granules or, if desired, flakes, is as follows:

|  | % |
|---|---|
| Vegetable powder | 70-90 |
| Dextrose | 5-20 |
| Starch | 5-10 |
| Fat | 1-5 |
| Sieve analysis of the vegetable powder: | |
| 0.25-0.75 mm | 3 |
| 0.10-0.25 mm | 56 |
| < 0.1 mm | 41 |

If desired, the obtained granules can be processed to flakes with the aid of a roller before drying.

If exclusively granules or lumps are desired, one may suitably

|  | % |
|---|---|
| Vegetable powders | 70-90 |
| Starch or milled grain | 10-30. |

It is still remarked that the flakes of the invention also can be suitabily incorporated into the flakes-shaped pet food according to a patent application filed simultaneously herewith.

## Claims

1. Digestible vegetable composition for pet food, characterized in that it has the form of particles which contain predominantly powdered vegetable and furthermore minor amounts of starch, and, if desired, sugars and fat.

2. Digestible vegetable composition according to claim 1, characterized in that the starch has been pre-gelatinized.

3. Digestible vegetable composition according to either claim 1 or claim 2, characterized in that it contains dextrose as sugar.

4. Digestible vegetable composition according to any of claims 1-3, characterized in that the particles possess a fat-containing coating.

5. Digestible vegetable composition according to any of claims 1-4, characterized in that the particles are in the shape of flakes having a thickness of 0.2-3 mm.

6. Digestible vegetable composition according to any of claims 1-4, characterized in that it has the shape of granules or lumps.

7. A process for manufacturing a digestible vegetable composition according to claims 1-6, characterized by milling vegetable in dried form to a powder, mixing a predominant amount of the powder with a minor amount of starch, and, if desired one or more sugars and/or fats, and extruding the obtained mixture, and, if desired, providing the obtained particles with a coating.

8. A process according to claim 7, characterized in that the extruded particles are processed with a roller to obtain flakes.

Claims for the following Contracting State: ES.

1. A process for manufacturing a digestible composition for pet food, characterized by milling vegetable in dried form to a powder, mixing a predominant amount of the powder with a minor amount of starch, and, if desired, one or more sugars and/or fats, and bringing the product into the desired shape.

2. A process according to claim 1, characterized in that the product is brought into the desired shape by extrusion and comminution of the extrudate, whereafter, if desired, the obtained particles are provided with a coating.

3. A process according to claims 2, characterized in that the extruded particles are processed with a roller to obtain flakes.

4. A process according to any of claims 1-3, characterized by using starch which has been pregelatinized.

5. A process according to any of claims 1-4, characterized by using dextrose as the sugar.

6. A process according to any of claims 1-5, characterized by applying a fat-containing coating to the particles.

7. A process according to any of claims 1-6, characterized in that the composition is manufactured in the shape of flakes having a thickness of 0.2-3 mm.

8. A process according to any of claims 1-6, characterized in that the composition is manufactured in the shape of granules or lumps.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | GB-A-1 440 116 (UNCLE BEN'S OF AUSTRALIA PTY LTD) <br> * Example 1i; page 2, line 125 - page 3, lines 12,59-67 * <br> --- | 1,2,4,6,7 | A 23 K 1/18 <br> A 23 K 1/14 |
| X | AT-B- 316 974 (THE QUAKER OATS CO.) <br> * Claim 1; example 1; page 4, lines 19-28 * <br> --- | 1-3,6,7 | |
| X | US-A-4 225 630 (ESRA PITCHON) <br> * Claims 1,5,7; column 3, lines 35-38 * <br> --- | 1,2,6,7 | |
| X | GB-A- 471 559 (F.W. GOODE) <br> * Claims 1,5-7; page 1, lines 78-83; page 2, lines 14-21,89-96 * <br> --- | 1,3 | |
| A | FR-A- 656 120 (P. ZELENSKY) <br> * Page 1, left-hand column, line 1 - right-hand column, line 21 * <br> --- | 1,3 | |
| A | GB-A-1 509 339 (STAR-KIST FOODS) <br> * Page 3, lines 91-100 * <br> --- | 1 | TECHNICAL FIELDS SEARCHED (Int. Cl.4) |
| A | DE-A-2 914 407 (E. MÜLLER) <br> * Page 2, lines 1-3; page 4, lines 1-5; examples 1,2 * <br> --- | 1 | A 23 K |
| A | DE-B-2 841 487 (E. MÜLLER) <br> * Claim * <br> --- | 1 | |
| D,A | FR-A-2 594 644 (C. GIRAUD) <br> * Claims 1-3; page 5, lines 25-33 * <br> ---      -/- | 1 | |

The present search report has been drawn up for all claims

| Place of search | Date of completion of the search | Examiner |
|---|---|---|
| THE HAGUE | 20-07-1989 | DEKEIREL M.J. |

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 8, no. 93 (C-220)[1530], 27th April 1984; & JP-A-59 11 147 (NIHON NOUSAN KOGYO K.K.) 20-01-1984 * Abstract * | 1 | |
| A | US-A-4 258 036 (P.T. GREER) * Column 1, line 53 - column 2, line 4 * | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 20-07-1989 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)